# FASCICULE DE BREVET EUROPEEN

(11) **EP 1 051 100 B1**
(45) Date de publication et mention de la délivrance du brevet: **09.04.2003**
(21) Numéro de dépôt: 99972514.6
(22) Date de dépôt: 26.11.1999
(51) Int. Cl.: A47J 43/044

(54) **APPAREIL ELECTROMENAGER DE PREPARATION CULINAIRE A BOITIER MOTEUR SUPERIEUR**
KÜCHENMASCHINE MIT OBERHALB ANGEORDNETEM MOTOR
ELECTRICAL HOUSEHOLD APPLIANCE FOR FOOD PREPARATION WITH TOP MOTOR HOUSING

(30) Priorité: 26.11.1998 FR 9815087
(43) Date de publication de la demande: 15.11.2000
(73) Titulaire: SEB S.A., 69130 Ecully (FR)
(72) Inventeur: ASTEGNO, Jean-Paul, F-64420 Espoey (FR); TOMPA, Carole, Line, F-65000 Tarbes (FR); MARTIN, Guy, F-65290 Louey (FR)
(74) Mandataire: Kiehl, Hubert
(86) Numéro de dépôt international: FR9902923
(87) Numéro de publication internationale: WO00030516

(56) Documents cités:
- EP-A- 0 257 732
- FR-A- 2 642 294
- US-A- 4 359 283
- US-A- 4 708 487

## Description

La présente invention concerne le domaine technique général des appareils ménagers de préparation culinaire du genre robot ménager multi-usages, comportant un récipient de travail et un couvercle formant un boîtier dans lequel est disposé un moteur entraînant de la face inférieure du boîtier un outil de travail rotatif disposé dans le récipient.

La présente invention concerne plus particulièrement mais non exclusivement les appareils comportant un récipient de travail en verre. Les outils de travail rotatifs peuvent être de tout type, et par exemple être destinés à hacher, à broyer, à mélanger, à émulsionner, ou à pétrir.

Il est connu du document US 4 708 487 de réaliser un appareil mélangeur pour liquides et/ou solides, comportant un boîtier, fixé sous un plan de travail, et dans lequel est disposé une motorisation, un récipient de travail, dont la partie supérieure est vissée sur le fond du boîtier, et un ensemble de travail à entraînement supérieur monté sur la partie inférieure du boîtier, l'ensemble de travail comportant en son extrémité inférieure un pivot tournant dans une cavité centrale du fond du récipient. Un interrupteur de sécurité disposé dans le fond du boîtier est activé lorsque le récipient est vissé sur le boîtier.

Dans cet appareil il est nécessaire de monter l'ensemble de travail sur l'entraînement avant de mettre en place le récipient. Un inconvénient de cette disposition est que l'ensemble de travail est accessible et relié à la motorisation lors de la mise en place du récipient. Comme le boîtier est fixé sous un plan de travail, la mise en place du récipient peut être délicate si le boîtier est disposé dans un endroit dont l'accessibilité n'est pas optimale. L'utilisation d'un tel appareil n'est pas très aisée ni très sécurisante pour l'utilisateur.

Il est connu de réaliser un appareil électroménager de préparation culinaire comportant un récipient de travail fermé par un couvercle formant un boîtier dans lequel est disposé une motorisation associée à des moyens d'entraînement. L'appareil comporte un outil de travail formé par un disque émulsionneur monté sur un axe dont l'extrémité inférieure forme un pivot tournant dans une cavité ménagée dans le fond du récipient et dont l'extrémité supérieure est engagée avec les moyens d'entraînement. L'appareil comporte en outre une coupelle comportant un orifice central duquel émerge la partie supérieure de l'axe du disque émulsionneur lorsque la coupelle est disposée dans le récipient. Cette coupelle est prévue pour coopérer avec un dispositif de sécurité monté dans le boîtier prévu pour interdire le fonctionnement de l'appareil en l'absence de coupelle. L'utilisateur introduit de préférence le disque émulsionneur surmonté de la coupelle dans le récipient. L'utilisateur peut aussi disposer le disque émulsionneur dans le récipient. Une partie du disque vient alors en contact avec le fond du récipient et l'axe s'incline légèrement. L'utilisateur doit introduire la coupelle sur l'axe puis redresser l'axe avant de pouvoir achever la mise en place de la coupelle dans le récipient.

Cette solution permet une mise en place aisée de l'outil de travail dans le récipient. Cette solution permet aussi de disposer d'un récipient de travail ne comportant pas d'insert métallique, ce qui permet par exemple l'utilisation du récipient de travail dans un four à micro-ondes.

Ces dispositions présentent toutefois l'inconvénient d'être difficilement transposables à un outil de travail tel qu'un outil coupant. Les formes de lames permettant une bonne efficacité de coupe associée à un coût de fabrication réduit ne permettent pas d'obtenir un outil stable sur le fond du récipient. La mise en place simultanée d'une coupelle et d'un outil coupant est peu sécurisante pour l'utilisateur, surtout lorsque l'appareil concerné est de grande taille, car la coupelle ou le récipient s'interpose entre l'outil de travail et l'oeil de l'utilisateur qui souhaite contrôler le bon déroulement de l'opération.

Il est connu de la demande de'brevet FR-A-2 743 710 de réaliser un appareil électroménager de préparation culinaire comportant également un récipient de travail fermé par un couvercle formant un boîtier dans lequel est disposé une motorisation associée à des moyens d'entraînement. Un ensemble de travail rotatif à entraînement supérieur est disposé dans le récipient et comporte un moyen d'appui, monté libre en rotation par rapport à l'ensemble de travail rotatif et prévu pour être mis en place contre le fond du récipient. Le moyen d'appui est solidaire de l'ensemble de travail rotatif. Le moyen d'appui est formé par exemple par une embase dans laquelle est emmanché un tourillon, lequel tourillonne dans un puits central ménagé dans le moyeu de l'ensemble de travail rotatif.

Cette solution permet de disposer d'un récipient de travail ne comportant pas d'insert métallique, dans lequel peuvent être utilisés différents types d'outils. Grâce à l'embase, l'outil mis en place dans le récipient de travail reste stable. L'utilisateur peut mettre en place sans difficulté une coupelle ou le boîtier moteur.

Les inconvénients de cette solution sont liés à la difficulté de nettoyer l'ensemble de travail et le moyen d'appui, solidaires et mobiles en rotation l'un par rapport à l'autre. En particulier la matière alimentaire dans laquelle sont plongés au moins partiellement l'ensemble de travail et le moyen d'appui est susceptible de s'infiltrer dans la liaison mécanique permettant la rotation de l'ensemble de travail par rapport au moyen d'appui, par exemple autour du tourillon tournant dans le puits central. Il en résulte des conditions de nettoyage peu satisfaisantes, les parties concernées étant généralement difficiles d'accès. De plus la présence d'un outil de travail tranchant ne facilite pas les opérations de nettoyage.

L'objet de la présente invention est proposer un appareil électroménager de préparation culinaire dont la mise en place de l'outil de travail dans le récipient ne présente pas de risque pour l'utilisateur.

Un autre objet de la présente invention est de proposer un appareil électroménager de préparation culinaire comportant un outil de travail qui soit efficace tout en présentant un coût de fabrication réduit.

Un autre objet de la présente invention est de proposer un appareil électroménager de préparation culinaire comportant un outil de travail dont le nettoyage soit facilité.

Un autre objet de la présente invention est de proposer un appareil électroménager de préparation culinaire comportant différents types d'outils de travail.

Un autre objet de la présente invention est de proposer un appareil électroménager de préparation culinaire comportant un récipient de travail sans insert métallique.

Un autre objet de la présente invention est de proposer un appareil électroménager de préparation culinaire comportant un récipient de travail de grande taille.

Les objets assignés à l'invention sont atteints avec un appareil électroménager de préparation culinaire, comportant un récipient de travail, un ensemble de travail rotatif, un boîtier disposé sur le récipient, le boîtier incluant un moteur associé à des moyens d'entraînement de l'ensemble de travail, le récipient de travail comportant une cavité, respectivement un pivot, prévu(e) pour coopérer avec un pivot, respectivement une cavité, disposé(e) sur l'extrémité inférieure de l'ensemble de travail selon l'axe de rotation dudit ensemble, du fait que le récipient de travail comporte autour de la cavité, respectivement du pivot, une première zone périphérique de contact prévue pour coopérer avec une deuxième zone périphérique de contact de l'ensemble de travail, ménagée en vis à vis autour du pivot, respectivement de la cavité, un espacement e entre la première zone et la deuxième zone, défini lorsque l'axe de rotation de l'ensemble de travail est perpendiculaire au plan formé par la première zone, étant compris entre 2% et 6% d'une distance r (ou r') définie par rapport à l'axe de rotation et au(x) point(s) de contact de la première zone avec la deuxième zone lorsque l'axe de rotation de l'ensemble de travail est incliné.

Ainsi l'ensemble de travail mis en place contre le fond du récipient s'incline très légèrement par rapport à son axe de rotation. La mise en place du boîtier moteur est facilité. Lorsque le boîtier moteur est disposé sur le récipient, un espace e est ménagé entre la première zone de contact appartenant du fond du récipient et la deuxième zone de contact appartenant à l'ensemble de travail maintenu sur son axe de rotation. L'absence de parties mobiles en rotation à la base de l'ensemble de travail permet de facititer le nettoyage de cet élément en contact avec la matière alimentaire. L'absence d'insert métallique dans le récipient de travail facilite le nettoyage du récipient. L'outil de travail peut être de tout type. Cette construction peut être envisagée pour toutes les tailles d'appareils de préparation culinaire, et notamment pour les appareils domestiques de grande capacité à boîtier moteur supérieur, actuellement peu répandus.

Avantageusement la première et / ou la deuxième zone est / sont annulaires. Cette disposition permet de simplifier la géométrie du fond du récipient et / ou de la base de l'ensemble de travail.

La première et la deuxième zone peuvent être discontinues.

Avantageusement l'appareil comporte une coupelle mise en place dans le récipient et prévue pour coopérer avec un dispositif de sécurité disposé dans le boîtier. Cette disposition permet notamment d'éviter que l'utilisateur n'accède à l'outil de travail lors du retrait du boîtier. Cette disposition permet aussi de faciliter le nettoyage de l'appareil, la coupelle protégeant le boîtier moteur des projections de matière alimentaire et pouvant être plongée dans l'eau ou passée au lave-vaisselle.

Avantageusement le dispositif de sécurité coopère avec le récipient et la coupelle. Cette disposition permet d'éviter que l'utilisateur puisse mettre en rotation l'ensemble de travail monté sur le boîtier en l'absence du récipient.

Avantageusement le dispositif de sécurité comporte une bascule dont un bras coopère avec le récipient et dont un autre bras coopère avec la coupelle, un microrupteur monté sur la bascule autorisant le fonctionnement de l'appareil lorsque le boîtier est en place sur le récipient comportant la coupelle. Une telle construction est fiable et peu onéreuse.

Avantageusement l'ensemble de travail comporte un moyeu prévu pour être entraîné par les moyens d'entraînement, sur lequel est monté de manière amovible un outil de travail. Cette disposition permet de monter différents types d'outils sur un même moyeu. Le nettoyage et le rangement des outils de travail sont facilités.

Avantageusement le pivot ou la cavité de l'ensemble de travail est ménagé sur le moyeu. Cette disposition permet de limiter les efforts axiaux entre le moyeu et l'outil.

Avantageusement une zone annulaire tronconique entoure la cavité, la zone annulaire tronconique étant orientée vers le bas lorsque la cavité est ménagée dans le récipient et vers le haut lorsque la cavité est ménagée dans l'ensemble de travail. Cette disposition permet de faciliter le centrage lors de la mise en place de l'ensemble de travail dans le récipient ainsi que le retour du pivot dans la cavité en cas de décentrage.

Selon un mode de réalisation la première zone périphérique de contact est en relief par rapport au fond du récipient et est prolongée vers l'extérieur par une zone annulaire extérieure tronconique orientée vers le haut, et la cavité est ménagée dans le récipient.

Selon un autre mode de réalisation, le pivot est ménagé sur le fond du récipient, et la première zone périphérique de contact est dans le plan du fond du récipient.

Ces dispositions permettent de limiter l'épaisseur du fond du récipient en dehors de la zone centrale tout en évitant les angles vifs dans le fond du récipient,

Selon un mode de réalisation préféré, le récipient est en verre ou en vitrocéramique.

L'invention sera mieux comprise à l'étude d'exemples de réalisation pris à titre nullement limitatifs et illustrés dans les figures annexées dans lesquelles :
- la figure 1 est une vue de côté en coupe d'un exemple de réalisation d'un appareil selon l'invention,
- la figure 2 est une vue de côté en éclaté de l'ensemble de travail rotatif et du récipient 1 montrés à la figure 1,
- la figure 3 est une vue en coupe du corps de l'ensemble de travail rotatif montré aux figures 1 et 2,
- la figure 4 est une vue du moyeu de l'ensemble de travail rotatif montré aux figures 1 et 2,
- la figure 5 est une vue agrandie d'un détail de la figure 1,
- la figure 6 est une vue en perspective d'un autre outil pouvant être monté sur le moyeu montré à la figure 4,
- la figure 7 est une vue partielle de côté en coupe d'un deuxième exemple de réalisation d'un appareil selon l'invention,
- la figure 8 est une vue partielle de dessous de l'ensemble de travail montré à la figure 7,
- la figure 9 est une vue partielle de côté en coupe d'un troisième exemple de réalisation d'un appareil selon l'invention,
- la figure 10 est une vue partielle de côté en coupe d'un quatrième exemple de réalisation d'un appareil selon l'invention,
- la figure 11 est une vue partielle de dessus du récipient montré à la figure 10,
- la figure 12 est une vue partielle de côté en coupe d'un cinquième exemple de réalisation d'un appareil selon l'invention,
- la figure 13 est une vue partielle de dessous de l'ensemble de travail montré à la figure 12,
- la figure 14 est une vue partielle de dessus du récipient montré à la figure 12.

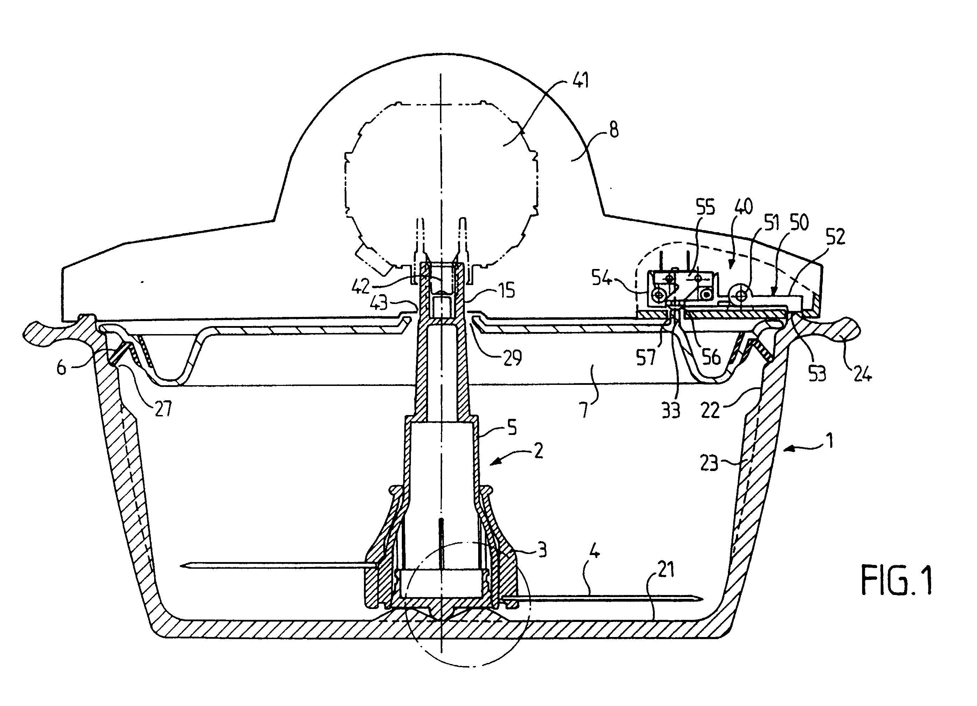

La figure 1 montre un appareil électroménager de préparation culinaire comprenant un récipient 1, un ensemble de travail rotatif 2, une coupelle 7 et un boîtier 8.

Le récipient 1 comporte un fond 21 et des parois latérales 22 légèrement évasées, sur lesquelles sont disposées des nervures 23 verticales de section triangulaire, dont l'épaisseur augmente du bas vers le haut du récipient. Le récipient 1 comporte également deux poignées 24. Les nervures 23 s'étendent principalement au dessus de la zone de travail de l'ensemble de travail rotatif 2. Le récipient 1 comporte un épaulement annulaire 27 prévu pour supporter la coupelle 7. De préférence le récipient 1 est réalisé en verre ou en vitrocéramique. A titre de variante d'autres matériaux sont envisageables.

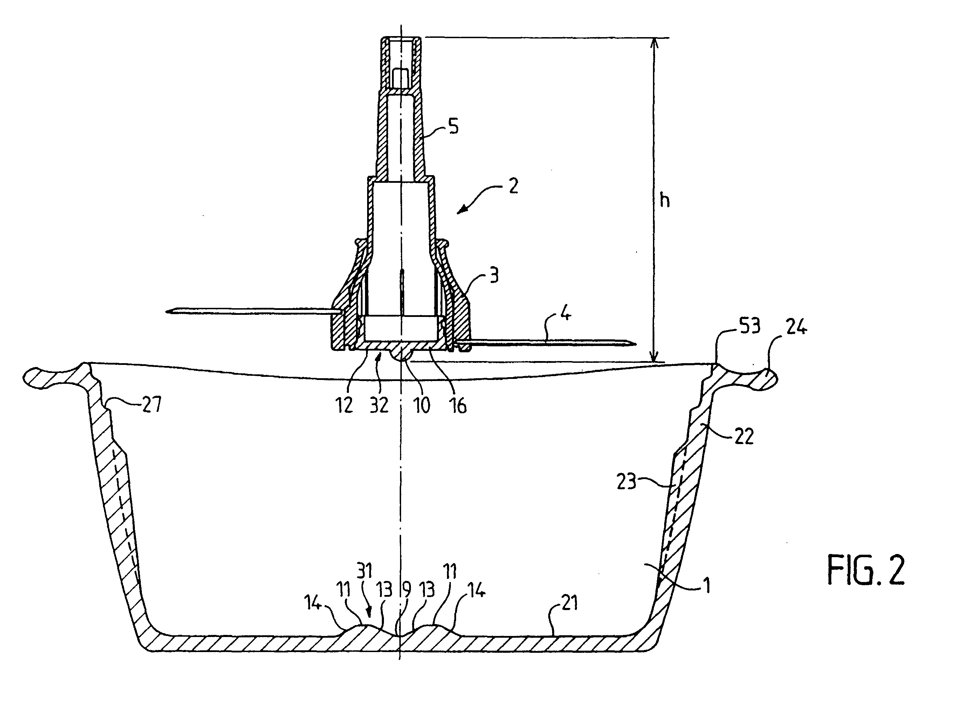

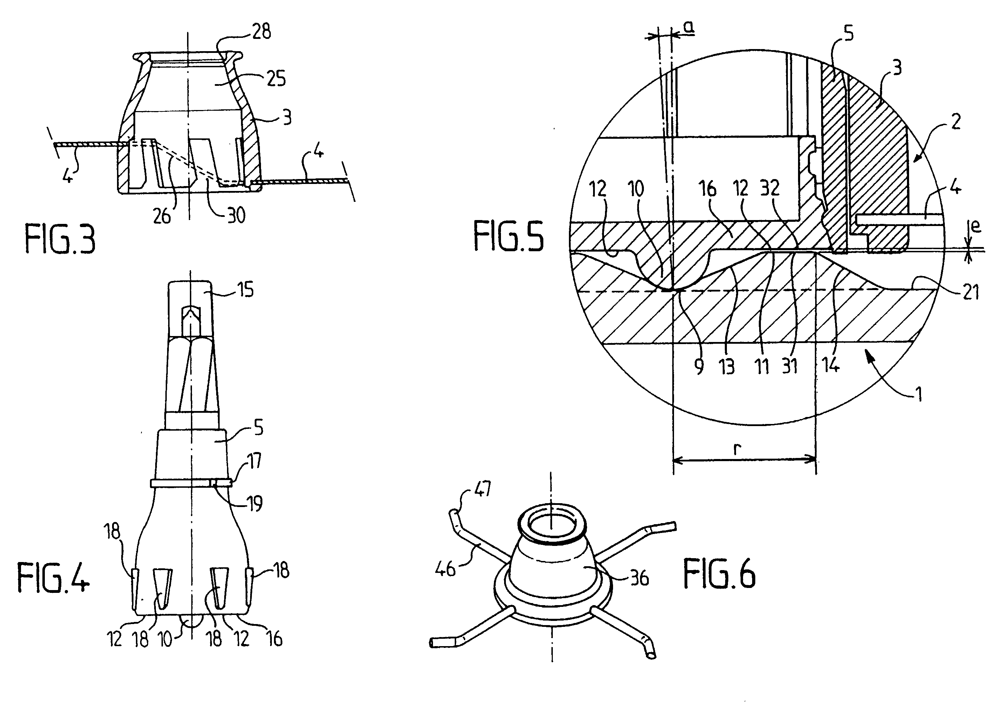

L'ensemble de travail rotatif 2 montré aux figures 1 et 2 comporte un corps 3 portant un outil de travail, montré également à la figure 3, monté de manière amovible sur un moyeu 5, montré également à la figure 4.

Une coupelle 7 est prévue pour fermer le récipient de travail 1 en laissant une ouverture 29 pour le passage du moyeu 5. La coupelle 7 comporte un joint 6 surmoulé prenant appui sur l'épaulement 27. La coupelle 7 comporte également un ergot 33 prévu pour coopérer avec un dispositif de sécurité 40 monté dans le boîtier 8.

Le boîtier 8 comporte une motorisation 41 reliée à des moyens d'entraînement 42 prévus pour coopérer avec la tête 15. Une ouverture 43 est ménagée dans la base du boîtier 8 pour laisser passer la tête 15.

Le dispositif de sécurité 40 comporte une bascule 50 montée sur un axe 51. Un bras 52 de la bascule 50 coopère avec un rebord 53 du récipient 1. Un deuxième bras 54 est disposé à l'opposé du premier bras 52 par rapport à l'axe 51, et porte un microrupteur 55 dont le bouton de commande 56 peut être actionné par l'ergot 33 de la coupelle 7.

Lorsque l'utilisateur met en place le boîtier 8 sur le récipient 1 dans lequel est disposé la coupelle 7, le rebord 53 repousse le bras 52, ce qui entraîne la rotation de la bascule 50. Le bouton 56 du microrupteur est amené dans une position dans laquelle l'ergot 33 de la coupelle 7 coopère avec ledit bouton pour fermer le circuit du microrupteur 55. La motorisation 41 peut être alimentée.

En l'absence de la coupelle 7, le bouton 56 n'est pas activé. En l'absence du récipient 1 le bras 52 n'étant pas bloqué en rotation par le rebord 53, l'ergot 33 repousse le bouton 56 et entraîne la rotation de la bascule 50. Le bouton 56 n'est pas non plus activé.

Comme bien visible sur la figure 5, le fond 21 du récipient 1 comporte en son centre une zone annulaire 11 horizontale, surélevée par rapport au fond, et raccordée à celui-ci par une zone annulaire extérieure 14 tronconique orientée vers le haut. La zone annulaire 11 est prolongée vers le centre par une zone annulaire tronconique 13 orientée vers le bas. Une cavité 9 en forme de calotte sphérique occupe le centre de la zone annulaire tronconique 13.

Le corps 3 montré aux figures 1 à 3 est celui d'un outil de travail prévu pour hacher, et comporte deux lames 4 décalées en hauteur. Tel que montré à la figure 3 le corps 3 forme une couronne présentant un passage central 25 prévu pour le passage d'une partie du moyeu 5. Le corps 3 peut être surmoulé sur une pièce métallique comportant deux bras, issus d'un moyeu annulaire ménageant un passage 26 pour le moyeu 5. Chaque bras forme une des lames 4. La section du passage central 25 diminue du bas vers le haut du corps 3, jusqu'à un seuil 28, et s'élargit au delà vers le haut dudit corps. Des rainures inclinées 30 sont ménagées dans le bas de la paroi intérieure du corps 3.

Le moyeu 5 montré à la figure 4 est de forme sensiblement de révolution et comporte une base 16 formant une surface annulaire 12 plane horizontale entourant un pivot 10 de forme hémisphérique disposé sur l'axe de rotation dudit moyeu. La section du moyeu 5 diminue de la base 16 jusqu'à une gorge 19 dans laquelle est monté un anneau fendu 17. Des dents 18 disposées sur le moyeu 5 sont prévues pour coopérer avec les rainures 30 ménagées dans le corps 3, afin de bloquer en rotation le corps 3 sur le moyeu 5. Le moyeu 5 comporte une tête 15 prévue pour coopérer avec des moyens d'entraînement associés à la motorisation.

Selon l'invention, et comme bien visible sur la figure 5, la cavité 9 du récipient de travail 1 est prévue pour coopérer avec le pivot 10 de l'ensemble de travail 2, et le récipient de travail 1 comporte autour de la cavité 9 une première· zone périphérique de contact 31 prévue pour coopérer avec une deuxième zone périphérique de contact 32 ménagée autour du pivot 10. Lorsque l'axe de rotation de l'ensemble de travail 2 est perpendiculaire au fond 21 du récipient 1, un espacement e entre la première zone 31 et la deuxième zone 32 est compris entre 2% et 6% d'une distance r définie par rapport à l'axe de rotation et aux points de contact de la première zone 31 avec la deuxième zone 32 lorsque l'axe de rotation de l'ensemble de travail 2 est incliné. Ainsi l'inclinaison de l'ensemble de travail 2 par rapport à la perpendiculaire au fond 21 du récipient 1 est comprise entre 1,14° et 3,43° lorsque la deuxième zone de contact 32 prend appui sur la première zone de contact 31.

La figure 5 montre en détail l'ensemble de travail 2 disposé sur le fond du récipient 1 selon un axe vertical. L'espacement e est ménagé entre la zone annulaire 11 du fond 21 du récipient 1, formant la première zone de contact 31, et la surface annulaire 12 de l'ensemble de travail 2, formant la deuxième zone de contact 32.

Dans l'exemple de réalisation montré aux figures 1 à 5, la distance r est de 16 mm et l'espacement e est de 0,35 mm soit un rapport e/r voisin de 0,022, correspondant à une inclinaison de 1,26°. L'ensemble de travail 2 montré à la figure 2 présentant une hauteur h égale à 115 mm, l'inclinaison au sommet est de l'ordre de 2,5 mm.

Dans cet exemple de réalisation, la première zone de contact 31 et la deuxième zone de contact 32 sont annulaires.

La figure 6 montre un corps 36 portant un outil de travail prévu pour le travail de pâtes. Le corps 36 porte quatre bras 46 dont les extrémités 47 sont recourbées vers l'arrière par rapport au sens de rotation, afin de mieux travailler la pâte. Le corps 36 peut être monté sur le moyeu 5 à la place du corps 3.

L'appareil selon l'invention s'utilise et fonctionne de la manière suivante.

L'utilisateur dispose l'ensemble de travail 2 au centre du récipient 1, par exemple en le tenant par la tête 15. La zone annulaire tronconique 13 du fond 21 du récipient 1 guide le pivot 10 de l'ensemble de travail 2 vers la cavité 9. Grâce à la surface annulaire 12 de la base 16 du moyeu 5, formant la deuxième zone de contact, coopérant avec la zone annulaire 11 du fond 21 du récipient 1, formant la première zone de contact, l'ensemble de travail 2 reste sensiblement perpendiculaire par rapport au fond 21 lorsque l'utilisateur le lâche. L'utilisateur introduit les ingrédients souhaités dans le récipient 1, puis dispose la coupelle 7 sur le récipient 1. La tête 15 du moyeu 5 passe par l'ouverture 30 de la coupelle 7. L'utilisateur dispose ensuite le boîtier 8 sur le récipient 1.

L'utilisateur peut remplacer l'outil de travail équipé de lames 4 par l'outil de travail 36 équipé de bras 46, ou par tout autre outil de travail.

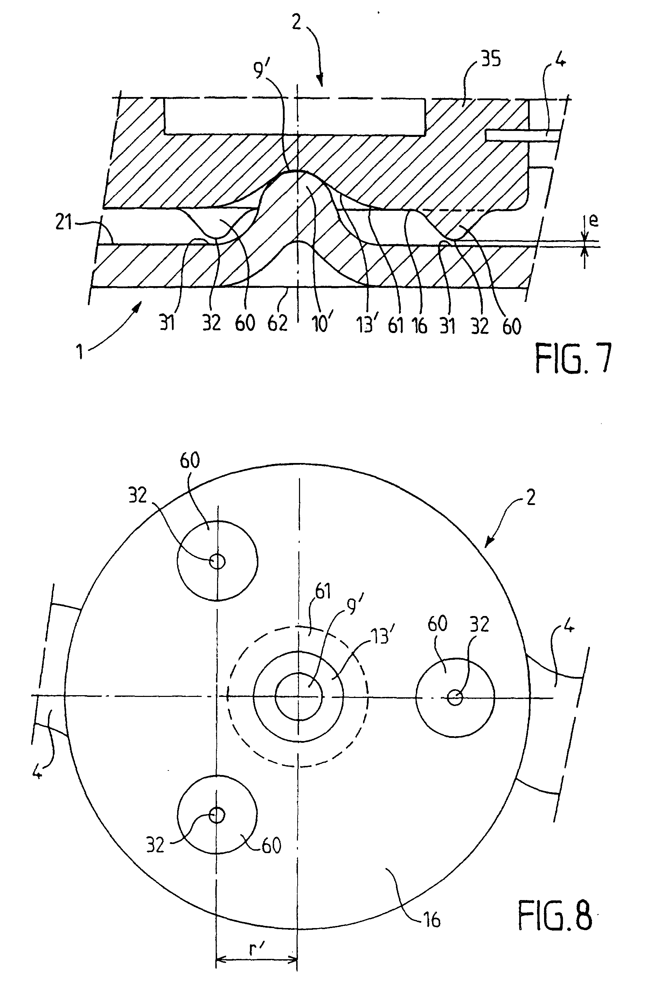

Un deuxième exemple de réalisation est montré aux figures 7 et 8. Cet exemple de réalisation diffère de l'exemple précédent en ce qu'un pivot 10' ménagé sur le fond 21 du récipient de travail 1 est prévu pour coopérer avec une cavité 9' disposée sur l'extrémité inférieure de l'ensemble de travail 2 selon l'axe de rotation dudit ensemble. L'ensemble de travail 2 porte deux lames 4 montées dans un corps 35 formant également le moyeu dudit ensemble de travail. Le corps 35 comporte une tête prévue pour l'entraînement, non montrée aux figures.

La première zone périphérique de contact 31 ménagée autour du pivot 10' du récipient de travail 1 est prévue pour coopérer avec la deuxième zone périphérique de contact 32 ménagée autour de la cavité 9' de l'ensemble de travail 2. La première zone de contact 31 est formée par le fond 21 du récipient 1. La deuxième zone de contact est formée par le sommet de picots 60 ménagés sur le fond de l'ensemble de travail 2. Tel que montré à la figure 8, les picots sont au nombre de trois et sont répartis régulièrement sous la base 16 de l'ensemble de travail 2. La cavité 9' est entourée zone par une annulaire tronconique 13', orientée vers le haut. Une zone de raccordement incurvée relie la zone annulaire 13 à la base 16. De plus une dépression 62 est formée sous le pivot 10' ménagé sur le fond 21 afin de limiter la surépaisseur du récipient 1 à cet endroit.

Dans cet exemple de réalisation la première zone de contact 31 est annulaire et la deuxième zone de contact 32 est discontinue. La distance r' par rapport à l'axe de rotation à laquelle la deuxième zone de contact 32 discontinue entre en contact avec la première zone de contact 31 est définie par la distance la plus courte entre l'axe de rotation et la ligne joignant deux zones de contact 32 contiguës, tel que montré à la figure 8.

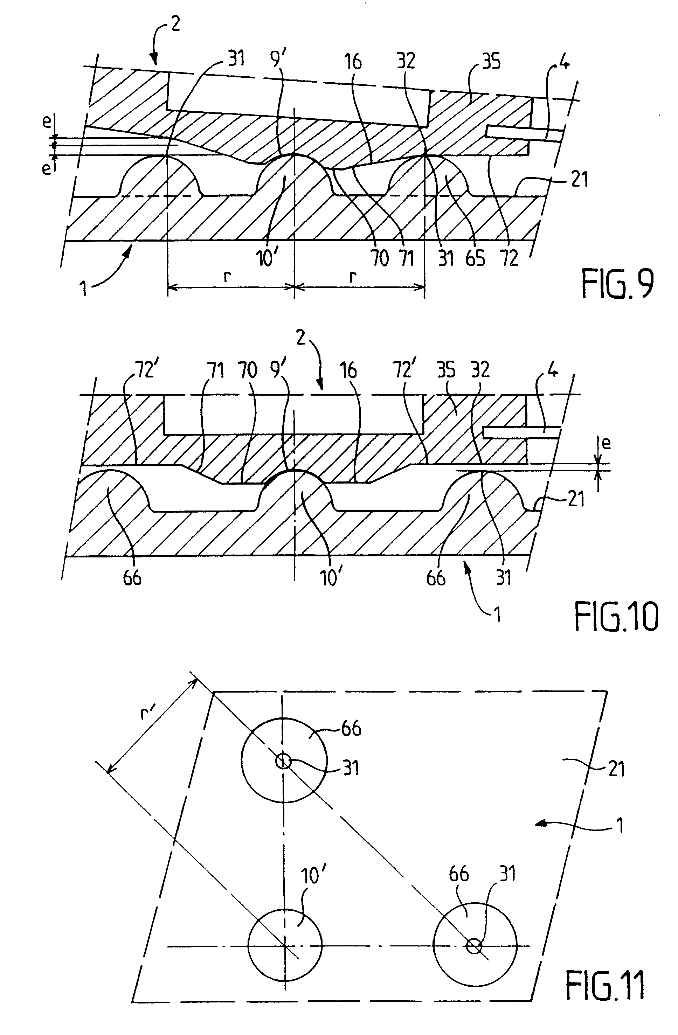

Un troisième exemple de réalisation est montré à la figure 9. Comme dans l'exemple précédent le récipient de travail 1 comporte un pivot 10' prévu pour coopérer avec une cavité 9' disposée sur l'extrémité inférieure de la base 16 de l'ensemble de travail 2, selon l'axe de rotation dudit ensemble.

L'ensemble de travail 2 porte deux lames 4 montées dans un corps 35 formant également le moyeu dudit ensemble de travail.

La cavité 9' est prolongée successivement par une zone annulaire horizontale 70, une première zone annulaire tronconique orientée vers le bas 71, et une deuxième zone annulaire tronconique orientée vers le bas 72, d'angle au centre plus ouvert que la première. La deuxième zone périphérique de contact 32 est formée sur la deuxième zone annulaire tronconique 72. La première zone périphérique de contact 31 ménagée sur le fond 21 du récipient 1 est formée sur une nervure annulaire 65. La section de la nervure 65 est sensiblement semi-cylindrique.

Dans cet exemple de réalisation, la première zone de contact 31 et la deuxième zone de contact 32 sont annulaires. A la figure 9 l'ensemble de travail 2 a été déposé dans le récipient 1 et se trouve en position d'appui, l'axe de rotation de l'ensemble de travail étant incliné. La première zone de contact 31 est en contact avec la deuxième zone de contact, et à l'opposé du point de contact par rapport au pivot 10' et à la cavité 9' un écart de deux espacements e est ménagé entre la première zone de contact 31 et la deuxième zone de contact 32.

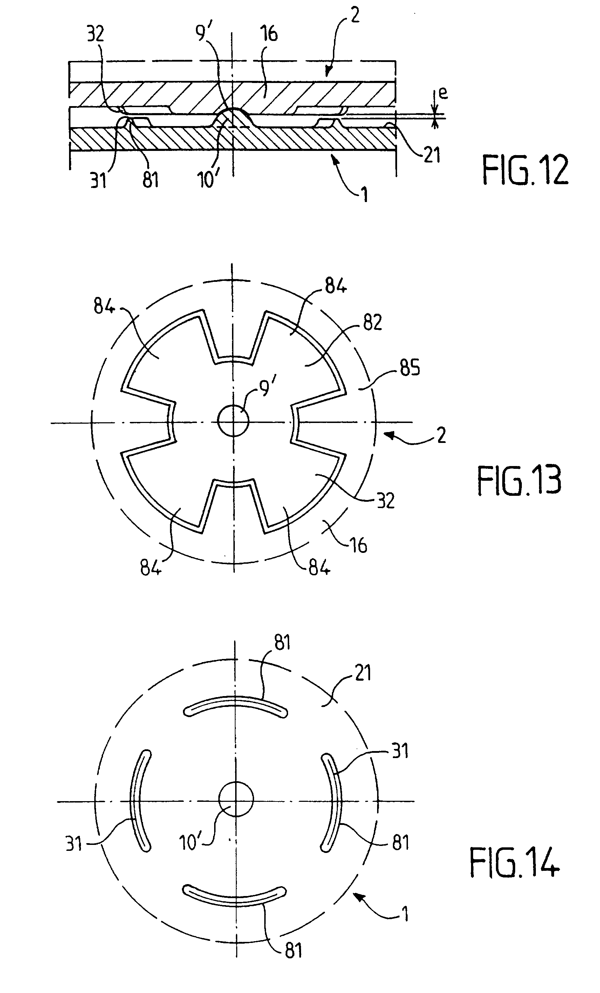

Un quatrième exemple de réalisation est montré aux figures 10 et 11. Cet exemple de réalisation diffère de l'exemple précédent en ce que la deuxième zone périphérique de contact 32 est formée sur une zone annulaire horizontale 72', et en ce que la première zone périphérique de contact 31 est formée au sommet de plots 66 issus du fond 21 du récipient 1. Les plots 66 sont au nombre de quatre et sont répartis régulièrement autour du pivot 10', Dans cet exemple de réalisation, la première zone de contact 31 est discontinue et la deuxième zone de contact 32 est annulaire. La distance r' par rapport à l'axe de rotation à laquelle la deuxième zone de contact 32 entre en contact avec la première zone de contact 31 discontinue est définie de la même manière que dans le deuxième exemple de réalisation.

Un cinquième exemple de réalisation est montré aux figures 12 à 14. L'ensemble de travail 2 comporte une cavité 9' disposée sous la base 16, sur l'axe de rotation dudit ensemble. Le fond 21 du récipient 1 comporte un pivot 10' prévu pour recevoir la cavité 9'. Sur le fond 21 du récipient 1 sont ménagées quatre secteurs de nervures annulaires 81 dont le sommet forme la première zone de contact périphérique 31. Sous la base 16 de l'ensemble de travail 2 est ménagée une surface plane 82 entourant la cavité 9'. La surface plane 82 comporte quatre branches radiales 84 formant la deuxième zone de contact périphérique 32. La base 16 présente autour de la surface 82, une périphérie déprimée 85.

Dans cet exemple de réalisation, la première zone de contact 31 et la deuxième zone de contact 32 sont annulaires et discontinues.

Tel qu'illustré aux figures 5 et 7, le fond 21 est plan et est parallèle à la première zone périphérique de contact 31, laquelle est plane. Tel qu'illustré aux figures 9, 10 et 11, le fond 21 est plan et est parallèle au plan formé par la première zone périphérique de contact 31, laquelle est discontinue. L'espacement e peut ainsi également être défini lorsque l'axe de rotation de l'ensemble de travail 2 est perpendiculaire au plan formé par la première zone périphérique de contact 31.

Pour un récipient dans lequel le fond 21 n'est pas parallèle au plan formé par la première zone périphérique de contact 31, par exemple lorsque le fond 21 est conique, orienté vers le haut ou vers le bas, l'espacement e peut être défini lorsque l'axe de rotation de l'ensemble de travail 2 est perpendiculaire au plan formé par la première zone périphérique de contact 31.

De nombreuses améliorations peuvent être apportées à cet appareil dans le cadre des revendications.

Notamment le pivot 10 ou la cavité 9' peuvent être ménagés sur le corps 3, 36 monté de manière amovible sur un moyeu.

Les formes tronconiques peuvent être générées par une droite ou une courbe. Les zones de contact périphériques 31, 32 peuvent comporter des rainures, par exemple radiales ou concentriques. Toutefois les rainures doivent ménager un espacement e approprié.

Le microrupteur 55 peut être disposé sur le bras 52 coopérant avec le rebord 53 du récipient 1, au lieu d'être disposé sur le bras 54 coopérant avec l'ergot 33 de la coupelle 7.

La cavité peut comporter des surfaces de contact discontinues avec le pivot, par exemple sous forme de nervures méridiennes. Inversement, le pivot peut comporter des surfaces de contact discontinues avec la cavité, par exemple également sous forme de nervures méridiennes.

La présente invention trouve une application dans les appareils électroménagers de préparation culinaire comportant un récipient de travail dans lequel tourne un ensemble de travail rotatif entraîné par un moteur placé dans un boîtier disposé au dessus du récipient de travail.

## Revendications

1. Appareil électroménager de préparation culinaire, comportant un récipient de travail (1), un ensemble de travail rotatif (2), un boîtier (8) disposé sur le récipient (1), le boîtier (8) incluant un moteur (41) associé à des moyens d'entraînement (42) de l'ensemble de travail (2), une cavité (9), respectivement un pivot (10'), ménagé(e) sur le fond (21) du récipient de travail (1), étant prévu(e) pour coopérer avec un pivot (10), respectivement une cavité (9'), disposé(e) sur l'extrémité inférieure de l'ensemble de travail (2) selon l'axe de rotation dudit ensemble, **caractérisé en ce que** le récipient de travail (1) comporte autour de la cavité (9), respectivement du pivot (10'), une première zone périphérique de contact (31) prévue pour coopérer avec une deuxième zone périphérique de contact (32) de l'ensemble de travail (2), ménagée en vis à vis autour du pivot (10), respectivement de la cavité (9'), un espacement (e) entre la première zone (31) et la deuxième zone (32), défini lorsque l'axe de rotation de l'ensemble de travail (2) est perpendiculaire au plan formé par la première zone (31), étant compris entre 2% et 6% d'une distance (r, r') définie par rapport à l'axe de rotation et au(x) point(s) de contact de la première zone (31) avec la deuxième zone (32) lorsque l'axe de rotation de l'ensemble de travail (2) est incliné.

2. Appareil selon la revendication 1, **caractérisé en ce que** la première zone (31) et / ou la deuxième zone (32) est / sont annulaire(s).

3. Appareil selon l'une des revendications 1 ou 2, **caractérisé en ce que** la première zone (31) et / ou la deuxième zone (32) est / sont discontinues.

4. Appareil selon l'une des revendications 1 à 3, **caractérisé en ce qu'**il il comporte une coupelle (7) mise en place dans le récipient (1) et prévue pour coopérer avec un dispositif de sécurité (40) disposé dans le boîtier (8).

5. Appareil selon la revendication 4, **caractérisé en ce que** le dispositif de sécurité (40) coopère avec le récipient (1) et la coupelle (7).

6. Appareil selon la revendication 5, **caractérisé en ce que** le dispositif de sécurité (40) comporte une bascule (50) dont un bras (52) coopère avec le récipient (1) et dont un autre bras (54) coopère avec la coupelle (7), un microrupteur (55) monté sur la bascule (54) autorisant le fonctionnement de l'appareil lorsque le boîtier (8) est en place sur le récipient (1) comportant la coupelle (7).

7. Appareil selon l'une des revendications 1 à 6, **caractérisé en ce que** l'ensemble de travail (2) comporte un moyeu (5) prévu pour être entraîné par les moyens d'entraînement (42), sur lequel est monté de manière amovible un corps (3) portant un outil de travail.

8. Appareil selon la revendication 7, **caractérisé en ce que** le pivot (10) ou la cavité (9') de l'ensemble de travail (2) est ménagé sur le moyeu (5).

9. Appareil selon l'une des revendications 1 à 8, **caractérisé en ce qu'**une zone annulaire tronconique (13, 13') entoure la cavité (9, 9'), la zone annulaire tronconique étant orientée vers le bas lorsque la cavité (9) est ménagée dans le récipient (1) et vers le haut lorsque la cavité (9') est ménagée dans l'ensemble de travail (2).

10. Appareil selon l'une des revendications 1 à 9, **caractérisé en ce que** la première zone périphérique de contact (31) est en relief par rapport au fond (21) du récipient (1) et est prolongée vers l'extérieur par une zone annulaire extérieure tronconique (14) orientée vers le haut, et **en ce que** la cavité (9) est ménagée dans le récipient (1).

11. Appareil selon l'une des revendications 1, 2, 4, 5, 6, 7, 8 ou 9, **caractérisé en ce que** le pivot (10') est ménagé sur le fond (21) du récipient (1), et **en ce que** la première zone périphérique de contact (31) est dans le plan du fond (21) du récipient (1).

12. Appareil selon l'une des revendications 1 à 11, **caractérisé en ce que** le récipient (1) est en verre ou en vitrocéramique.

## Claims

1. An electrical household appliance for preparing food, the appliance comprising a working receptacle (1), a rotary working assembly (2), and a housing (8) placed on the receptacle (1), the housing (8) including a motor (41) associated with drive means (42) for driving the working assembly (2), and the working receptacle (1) having a cavity (9) or a pivot (10') mounted on its bottom (21) in order to co-operate respectively with a pivot (10) or a cavity (9') placed on the bottom end of the working assembly (2) on the axis of rotation of said assembly, the appliance being **characterized in that** the working receptacle (1) has a first peripheral contact zone (31) around its cavity (9) or pivot (10') for co-operating with a facing second peripheral contact zone (32) of the working assembly (2) provided around its pivot (10) or cavity (9'), and a gap e between the first and second working zones (31, 32) as defined when the axis of rotation of the working assembly (2) is perpendicular to the plane formed by the first zone (31) is of a magnitude that lies in the range 2% to 6% of a distance r (r') as defined relative to the axis of rotation by the point(s) of contact between the first zone (31) and the second zone (32) when the axis of rotation of the working assembly (2) is tilted.

2. An appliance according to claim 1, **characterized in that** the first zone (31) and/or the second zone (32) is/are annular.

3. An appliance according to claim 1 or claim 2, **characterized in that** the first zone (31) and/or the second zone (32) is/are discontinuous.

4. An appliance according to any one of claims 1 to 3, **characterized in that** it includes a shield (7) put into place in the receptacle (1) and designed to co-operate with a safety device (40) placed in the housing (8).

5. An appliance according to claim 4, **characterized in that** the safety device (40) co-operates with the receptacle (1) and with the shield (7).

6. An appliance according to claim 5, **characterized in that** the safety device (40) includes a rocker (50) having one arm (52) co-operating with the receptacle (1) and another arm (54) co-operating with the shield (7), a microswitch (55) mounted on the rocker (54)??? allowing the appliance to operate whenever the housing (8) is in position on the receptacle (1) and the receptacle (1) includes its shield (7).

7. An appliance according to any one of claims 1 to 6, **characterized in that** the working assembly (2) includes a hub (5) designed to be driven by the drive means (42) and having a body (3) carrying a working tool removably mounted thereon.

8. An appliance according to claim 7, **characterized in that** the pivot (10) or the cavity (9') of the working assembly (2) is provided on the hub (5).

9. An appliance according to any one of claims 1 to 8, **characterized in that** a frustoconical annular zone (13, 13') surrounds the cavity (9, 9'), the frustoconical annular zone being downwardly directed when the cavity (9) is provided in the receptacle (1) and upwardly directed when the cavity (9') is provided in the working assembly (2).

10. An appliance according to any one of claims 1 to 9, **characterized in that** the first peripheral contact zone (31) is in relief on the bottom (21) of the receptacle (1) and is extended outwards by an upwardly directed frustoconical outer annular zone (14), and **in that** the cavity (9) is provided in the receptacle (1).

11. An appliance according to any one of claims 1, 2, 4, 5, 6, 7, 8, or 9, **characterized in that** the pivot (10') is provided on the bottom (21) of the receptacle (1) and **in that** the first peripheral contact zone (31) lies in the plane of the bottom (21) of the receptacle (1).

12. An appliance according to any one of claims 1 to 11, **characterized in that** the receptacle (1) is made of glass or glass ceramic.

## Patentansprüche

1. Elektrohaushaltsgerät zum Zubereiten von Nahrungsmitteln, mit einem Arbeitsgefäß (1), einer drehbaren Arbeitseinheit (2), einem am Gefäß (1) angeordneten Gehäuse (8), wobei das Gehäuse (8) einen Motor (41) einschließt, dem Antriebsmittel (42) zum Antreiben der Arbeitseinheit (2) zugeordnet sind, wobei eine Vertiefung (9) bzw. ein Zapfen (10'), die bzw. der am Boden (21) des Arbeitsgefäßes (1) ausgebildet ist, dazu vorgesehen ist, mit einem Zapfen (10) bzw. einer Vertiefung (9') zusammenzuwirken, der bzw. die am unteren Ende der Arbeitseinheit (2) entlang der Drehachse der genannten Einheit angeordnet ist, **dadurch gekennzeichnet, dass** das Arbeitsgefäß (1) um die Vertiefung (9) bzw. um den Zapfen (10') herum einen ersten Umfangskontaktbereich (31) enthält, der dazu vorgesehen ist, mit einem zweiten Umfangskontaktbereich (32) der Arbeitseinheit (2) zusammenzuwirken, der gegenüberliegend um den Zapfen (10) bzw. um die Vertiefung (9') herum ausgebildet ist, wobei ein Freiraum (e) zwischen dem ersten Bereich (31) und dem zweiten Bereich (32) definiert ist, der dann, wenn die Drehachse der Arbeitseinheit (2) senkrecht zur durch den ersten Bereich (31) gebildeten Ebene verläuft, zwischen 2 % und 6 % eines Abstandes (r, r') beträgt, der bezüglich der Drehachse und dem Kontaktpunkt bzw. den Kontaktpunkten des ersten Bereichs (31) mit dem zweiten Bereich (32) definiert ist, wenn die Drehachse der Arbeitseinheit (2) geneigt verläuft.

2. Gerät nach Anspruch 1, **dadurch gekennzeichnet, dass** der erste Bereich (31) und/oder der zweite Bereich (32) ringförmig verlaufen.

3. Gerät nach Anspruch 1 oder 2, **dadurch gekennzeichnet, dass** der erste Bereich (31) und/oder der zweite Bereich (32) diskontinuierlich verlaufen.

4. Gerät nach einem der Ansprüche 1 bis 3, **dadurch gekennzeichnet, dass** es eine Schale (7) enthält, die in das Gefäß (1) eingesetzt wird und dazu vorgesehen ist, mit einer im Gehäuse (8) angeordneten Sicherheitsvorrichtung (40) zusammenzuwirken.

5. Gerät nach Anspruch 4, dadurch gekenzeichnet, dass die Sicherheitsvorrichtung (40) mit dem Gefäß (1) und der Schale (7) zusammenwirkt.

6. Gerät nach Anspruch 5, **dadurch gekennzeichnet, dass** die Sicherheitsvorrichtung (40) eine Wippe (50) enthält, von der ein Arm (52) mit dem Gefäß (1) zusammenwirkt und ein anderer Arm (54) mit der Schale (7) zusammenwirkt, wobei ein an der Wippe (54) angebrachter Mikroschalter (55) den Betrieb des Geräts dann erlaubt, wenn das Gehäuse (8) auf das Gefäß (1) gesetzt ist, das die Schale (7) enthält.

7. Gerät nach einem der Ansprüche 1 bis 6, **dadurch gekennzeichnet, dass** die Arbeitseinheit (2) eine Nabe (5) enthält, die dazu vorgesehen ist, von den Antriebsmitteln (42) angetrieben zu werden, an der ein ein Arbeitswerkzeug tragender Körper (3) abnehmbar gelagert ist.

8. Gerät nach Anspruch 7, **dadurch gekennzeichnet, dass** der Zapfen (10) bzw. die Vertiefung (9') der Arbeitseinheit (2) an der Nabe (5) ausgebildet ist.

9. Gerät nach einem der Ansprüche 1 bis 8, **dadurch gekennzeichnet, dass** ein kegelstumpfförmiger Ringbereich (13, 13') die Vertiefung (9, 9') umschließt, wobei der kegelstumpfförmige Ringbereich dann, wenn die Vertiefung (9) im Gefäß (1) ausgebildet ist, nach unten gerichtet ist und dann, wenn die Vertiefung (9') in der Arbeitseinheit (2) ausgebildet ist, nach oben gerichtet ist.

10. Gerät nach einem der Ansprüche 1 bis 9, **dadurch gekennzeichnet, dass** der erste Umfangskontaktbereich (31) reliefartig aus dem Boden (21) des Gefäßes (1) vorsteht und sich nach außen über einen kegelstumpfförmigen, äußeren Ringbereich (14) fortsetzt, der nach oben gerichtet ist, und dass die Vertiefung (9) im Gefäß ausgebildet ist.

11. Gerät nach einem der Ansprüche 1, 2, 4, 5, 6, 7, 8 oder 9, **dadurch gekennzeichnet, dass** der Zapfen (10') am Boden (21) des Gefäßes (1) ausgebildet ist und dass der erste Umfangskontaktbereich (31) in der Ebene des Bodens (21) des Gefäßes (1) verläuft.

12. Gerät nach einem der Ansprüche 1 bis 11, **dadurch gekennzeichnet, dass** das Gefäß (1) aus Glas oder Glaskeramik besteht.
